# EUROPEAN PATENT APPLICATION

(11) **EP 2 818 754 A1**
(43) Date of publication of application: **31.12.2014**
(21) Application number: 13174137.3
(22) Date of filing: 27.06.2013
(51) Int. Cl.: F16F 15/32, G01M 1/32

(54) **Tray for containing vehicle balancing weights, Cartridge comprising such a tray and Apparatus for dispensing vehicle balancing weights**

(71) Applicant: WEGMANN automotive GmbH & Co. KG, 97209 Veitshöchheim (DE)
(72) Inventor: Bürgel, Hans-Ulrich, 97849 Roden (DE)
(74) Representative: Lohr, Georg

(57) **Abstract**

A cartridge and an apparatus for dispensing vehicle balancing weights are disclosed. The cartridge is separated into two parts (100, 200) which are coupled and aligned with a coupling device (300). The dispenser comprises a transport unit arranged below the cartridge for containing balancing weights (31-37). The transport unit moves a balancing weight to a handling device.

## Description

### Field of the invention

The invention relates to devices for containing and dispensing weights used in vehicle ballasting applications, in particular for containing and dispensing weights used in balancing automobile or other vehicle wheels.

### Description of the related art

In automotive wheel balancing, individual wheel balancing weights are applied to specific positions of a rim. Basically, two types of balancing weight are used. The first kind is a balancing weight which is attached by a clamp, as disclosed in the European patent EP 1 613 876 B1, while the second kind is fixed by means of a self-adhesive tape, as disclosed in US patent 6,364,421 B1.

Both kinds of balancing weights are available in a plurality of sizes, resulting in different weights. When balancing a vehicle wheel, the correct size of balancing weight is selected and attached to the rim. Most balancing weights are supplied as bulk material in boxes, from which the required number of weights is manually taken.

This allows for a simple, comparatively cheap supply of balancing weights. The drawback is that the person who is taking the weights from the box may take a wrong weight, and therefore a further step of balancing is required. Furthermore, the process of taking the weights can hardly be automated. Therefore, other solutions as disclosed in WO 2008/103651 A1, using a continuous polymer tape, have been developed. This has the drawback that a solid balancing weight is significantly more robust and reliable than these continuous tapes.

DE 27 45 858 A1 discloses an apparatus for dispensing of components from a cartridge by means of a transport unit and a belt conveyor. The cartridge comprises at least one section forming a channel for containing the at least one component. The cartridge further comprises walls defining the channel. The channel comprises at least one discharge opening as well as at least one filling opening for the balancing weights. The discharge opening and the filling opening are connected through the channel for slidable conveying the balancing weights in the direction from the filling opening to the discharge opening.

### Summary of the invention

The problem to be solved by the invention is to provide a tray and a cartridge for containing vehicle balancing weights and an apparatus for automatic dispensing vehicle balancing weights, dispensing one or a plurality of weights adapted for a required balancing task without prolonged interruption. The weights should be dispensed in such a way that they can be handled by an automatic handling system for applying the weights to a rim.

In a first embodiment, a tray is adapted to contain at least one balancing weight for supplying the balancing weight to the apparatus for dispensing balancing weights. The tray may comprise one or more sections, wherein each section forming a channel for containing the at least one balancing weight. The at least one cartridge may comprise a plurality of trays, wherein each tray can hold vehicle balancing weights. The trays may be designed to hold a plurality of different balancing weights. They furthermore may be adapted to specific sizes of balancing weights. The trays may have a visible and/or computer readable encoding of at least one of tray size, tray capacity, balancing weight size, quantity of balancing weights in the tray. This may be done by a printed code like a number, a bar code or an electronic code like a transponder or a memory chip, which may be contacted by a microcontroller. Such an encoding may also be applied to the at least one cartridge, which comprises at least one tray. Furthermore, it is preferred, if each tray comprises at least one section, preferably at least two sections or a plurality of sections, which may be suited for accommodating different balancing weights. Each section may contain a single stack or a plurality of stacks of balancing weights. Preferably, there are successive stacks or section.

The tray comprises walls defining the channel for containing the at least one balancing weight. During operation, the balancing weights are guided within the channel in a direction downwardly from a filling opening to a discharge opening, which is located at the bottom of the tray. The balancing weights are transferred from the discharge opening to a transport unit, which may transfer the balancing weights to a handling device. This may be any automated system like an industrial robot. In specific cases, the balancing weights may also be manually handled. There may be any intermediate device like a chute or trays.

The filling opening allows refilling each channel with balancing weights. The channel is connecting the filling opening with the discharge opening, and the walls defining the channel being a guide for the balancing weights on their way down to the discharge opening. The balancing weights are slidable conveyed from the filling opening to the discharge opening through the channel.

During an operation for dispensing balancing weights, it occurs that one or more balancing weights may be jammed within the channel and the continuous flow of balancing weights downwardly to the discharge opening is interrupted. To get access to the at least one jammed balancing weight, all balancing weights stacked overhead the jammed balancing weight must be separated from the channel. In most cases, the jam of balancing weights occurs in a lower portion of the tray, may be near to the discharge opening, from which a feeder takes over the balancing weights. The invention allows removing an upper part of the two-part-tray from a lower part of the tray without extracting the balancing weights out of the upper part. If the upper part is removed from the lower part, access is enabled to the jammed balancing weight in the lower part of the tray, wherein the lower part comprises the discharge opening. Subsequently, the jammed balancing weight can be separated out of the channel, and in a further step, the removed upper part may be refitted to the lower part. In case the balancing weight getting jammed in the upper part, the upper part can be removed from the lower part, and that jammed balancing weight can be extracted or separated out of the upper part without extracting the balancing weights out of the lower part. Therefore, downtime of dispensing balancing weights can be reduced to a minimum. To achieve this, the tray is separated into at least a first part defining the upper part and a second part defining the lower part of the tray. The upper part and the lower part each comprise a portion of the channel. The tray further comprises a coupling device for detachable connecting the upper part to the lower part. The coupling device allows removing the upper part from the lower part. During refitting, the upper part is aligned with the lower part, so that the walls defining the upper and lower portion of the channel are aligned flush without any transition. In the coupled state of the tray, the balancing weights may slide downwardly within the channel without getting caught at a junction of the walls defining the channel.

In a further embodiment, at least two parallel channels for containing balancing weights and a partition wall therebetween are provided. The at least one tray may comprise a plurality of channels, wherein each tray can hold vehicle balancing weights. The trays may be designed to hold a plurality of different balancing weights.

According to a further embodiment, the partition wall of the lower part comprises two webs emanating from sidewalls defining the channels. In case the upper part is removed from the lower part, the slotted partition wall enabling access to the discharge opening in order to extract that jammed balancing weight. In a preferred embodiment, the at least one partition wall of the upper part extends with full length between the sidewalls. Therefore, in the assembled state of upper and lower part, the continuous partition wall of the upper part may not allow manual access to the discharge opening through the entire tray, under which the feeder is in fast movement. In a further embodiment, the tray may comprise a plurality of channels and partition walls therebetween. The partitions walls therefore forming a lamellar structure, which prevents access to the discharge opening. In a further embodiment, a safety device may switch of the feeder when the upper part is removed from the lower part. The safety device may comprise a safety contact.

In a further embodiment, the coupling device comprises an aligning device and an interlock device for fastening the upper part to the lower part. The aligning device enables the walls defining the channels being aligned without any transition. The interlock device secures the upper part and the lower part, which are fitted together.

In a further embodiment, the interlock device comprises an angled and elongated hole and a pin interfering into the elongated hole in a locked state of the coupling device. For example, the pin is attached to the lower part, and the angled and elongated hole is located at the upper part. In a further embodiment, the interlock device is realized as a bayonet connector.

In a further embodiment, the coupling device further comprises a female member for receiving and end section of the upper or lower part. It is preferred, that the bottom section of the upper part is equipped with such a female member to receive an upper end section of the lower part. Therefore, the aligning device comprises the female member, and the end section of the upper or lower part is precisely fitted within the female member.

In a further embodiment, the upper part comprises a lower section opening on the opposite end to the filling opening, and the upper part further comprises a slider for closing optionally the lower section opening if the coupling device is unlocked and the lower and upper parts are separated. The adjustable slider prevents unwanted emptying of the channel when the upper part is removed from the lower part.

According to a further embodiment, a mounting section is provided connecting the lower part to the apparatus for dispensing the balancing weights. Thus, even the lower part can be removed from the apparatus for dispensing balancing weights.

In a further embodiment, the tray further comprises a top frame and bottom frame attached to the upper part of the tray. The frames surrounding the walls are defining the at least one channel. The bottom frame may projects the walls and thus defining the female member of the coupling device. The frames may be assembled to the walls defining the channel. The frames therefore hold the walls in an assembled state.

In a further embodiment, the bottom frame comprises a looking part of the interlock device. In particular, the bottom frame comprises the angled and elongated hole of the interlock device.

According to a further embodiment, the bottom frame comprises a guide for the slider. Therefore, the slider is adjustable guided by the bottom frame in order for closing the lower section opening or releasing the lower section opening.

In a further embodiment, the bottom frame and the top frame are linked together with at least one connecting rod. The upper part of the tray is therefore realized in a stable manner.

According to a preferred embodiment, the upper part has a greater height than the lower part. The invention has discovered that in most cases of failure, the balancing weight is getting jammed within the channel near the discharge opening that is in the lower part. Therefore, the preferred embodiment as described, allows extracting that jammed balancing weight out of the lower part when the higher upper part is removed.

In a further embodiment an apparatus for dispensing the balancing weights is disclosed, the apparatus comprises at least one cartridge as previously described. Such an apparatus for dispensing vehicle balancing weights may comprise a transport unit for transporting balancing weights from the discharge opening of the cartridge to a handling device as previously described. Such an apparatus and a method for dispensing balancing weights are disclosed in PCT/EP2013/054740, which is fully included herein by reference.

The transport unit may comprise at least one feeder for moving a selected balancing weight from a specific section of one of the trays from the discharge opening to a conveyor, i.e. a belt conveyor. The feeder preferably performs a linear movement and is preferably driven by a linear drive. The feeder is moving one selected balancing weight to the conveyor, which is lying on a transport surface from a tray section. The feeder may be operated in a mode, where the balancing weights are accessed sequential. Here, the feeder is pulled back from the belt conveyor with its end to a position behind the first section closest to the belt conveyor, but before the second section. When the feeder has reached this position, the whole stack of balancing weights in the first section (channel) falls down through the discharge opening so that the balancing weight at the bottom lies on a transport surface. Now, the feeder may be pushed forward, pushing the bottom balancing weight towards the belt conveyor, until the balancing weight falls on the belt conveyor. Then, the cycle is repeated again. If one section is empty, the procedure is repeated with the next section until all sections are empty. In a different embodiment of the feeder, the feeder may have an opening suited for accommodating one balancing weight. In this embodiment, the feeder is also pulled back from the belt conveyor until the balancing weight at the bottom of the first section closest to the belt conveyor can fall into this opening. Then, the direction of the feeder is reverted towards the belt conveyor and the balancing weight is transported to the belt conveyor. After all balancing weights of the first section have been transported to the belt conveyor, the feeder moves until it reaches the next section containing balancing weights, which may be the second section, and repeats the same procedure as before. In this way, one section after the other may be emptied. This mode of operation even works without stack lifters. Therefore, according to a simplified embodiment, only a feeder is provided for transporting the balancing weights from the at least one cartridge to the belt conveyor. In this case, the balancing weights are sliding on the surface of the feeder. Therefore, it is further preferred, if the feeder has a surface with a low friction coefficient, which preferably may be achieved by some low friction coating like PTFE.

As disclosed, any section of a tray may be selected for delivering a balancing weight to the belt conveyor. In a first embodiment, all sections of a tray may contain the same size of balancing weights, although it is also possible to use different sizes of balancing weights within different sections of the same tray. Furthermore, it may be possible to use different sections with different colors and/or design of balancing weights, preferably of the same size.

In a further embodiment, at least one sensor is provided for detecting, whether at least one balancing weight is available in a section of the cartridge. This allows for control of selection of individual weights. Such a sensor may be adapted for detecting, whether at least one balancing weight is jammed in at least one channel.

By using the apparatus disclosed herein, balancing weights may be selected and delivered with a comparatively high speed. Furthermore, by using multiple cartridges and/or trays in parallel, containing the same type of balancing weight, the speed of deliverance, which may be limited by mass inertia, specifically of the stacks of balancing weights, may be increased. When a section of the cartridge has become empty, it may be continuously refilled by removing the empty upper part and replace it with a filled upper part during operation without affecting operation. In a further embodiment, at least two sections, trays, or cartridges may be used in parallel to the same transport unit, while one is in operation, and the other is being replaced or being refilled.

Preferably, a belt conveyor is used to transfer at least one balancing weight from the transport unit to a handling device.

In a further embodiment, a controller is provided for controlling the transport unit. The controller may receive as an input signal a parameter describing which type of balancing weight is desired or describing a specific section and/or tray and/or cartridge from which a balancing weight is desired. It may further supply a time at which the balancing weight should be delivered. The controller is then controlling the transport unit and preferably the belt conveyor in such a way, that the selected balancing weight is received at the end of the belt conveyor at the optionally specified time. Most preferably, the controller controls the feeder drives as well as any further actuators. Furthermore, it evaluates signals from sensors, like the sensors for checking the availability of balancing weights in individual sections. It may furthermore evaluate signals from any further sensors. In addition, it may control the speed of the belt conveyor, and/or the position of trays. Furthermore, the controller evaluates signals from a sensor detecting a jammed balancing weight.

It is obvious that the embodiments disclosed herein are applicable to a broad variety of balancing weights like balancing weights, which may be held by a clamp or self-adhesive balancing weights.

### Description of Drawings

In the following, the invention will be described by way of example, without limitation of the general inventive concept, on examples of embodiment with reference to the drawings.
Figure 1 shows an apparatus for dispensing vehicle balancing weights.
Figure 2 shows the apparatus in a top view.
Figure 3 shows a first embodiment of the tray in a separated state.
Figure 4 shows the first embodiment in an assembled state.
Figure 5 shows the first embodiment in a locked state.
Figure 6 shows a top view of the tray with the slider in a closed position.
Figure 7 shows a top view of the tray with the slider in an open position.

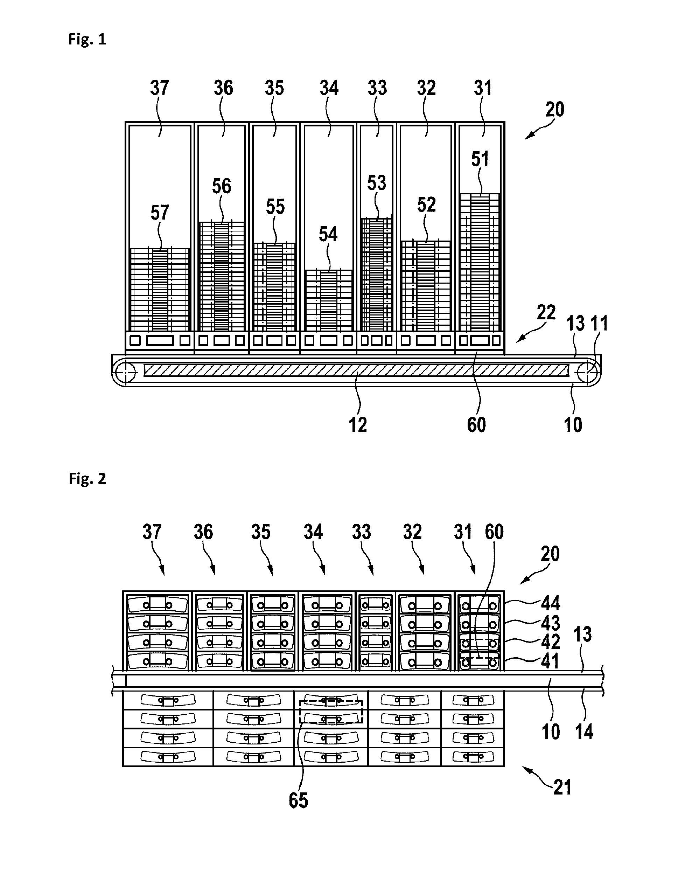

In Figure 1, a preferred embodiment of an apparatus for dispensing balancing weights according to the invention is shown. A belt conveyor 10 is provided for moving balancing weights from a cartridge 20 to a chute or at least one tray or any other device for further processing the balancing weights, which may be attached to any one side of the belt conveyor. The belt conveyor 10 may have a conveyor pulley 11, and it further may have a belt support 12, which may increase stability on large lengths of the belt. Below the cartridge 20, there is at least one transport unit 22 for transporting balancing weights from the cartridge to the belt conveyor. The cartridge 20 may comprise of at least one tray 31 to 37. These trays may be filled with balancing weights 51 to 57. In the individual trays, there may be different numbers, different sizes, different types, different colors, and different designs of balancing weights.

In Figure 2, a top view of the dispensing apparatus is shown. Here, a first cartridge 20 is shown on one side of the belt conveyor, and a second cartridge 21 at the other side. The belt conveyor 10 has conveyor sidewalls 13 and 14, preventing balancing weights from falling off the belt conveyor. The cartridges have individual trays 31 to 37, which are further subdivided into sections 41 to 44. Each tray may have an individual number of sections, although it is preferred to have the same number of sections. The cartridges may have a different number of trays and sections as shown herein. Furthermore, there may be only one of the cartridges at one side of the belt conveyor. Alternatively, there may be a higher number of cartridges.

In the center, belt conveyor 10 is shown with conveyor sidewalls 13 and 14. At both sides of the conveyor sidewalls, transport units 22 and 23 are shown. On top of the transport units are cartridges 20, 21, showing sections 41 to 44 and containing balancing weights 51. The main part of the transport unit is the feeders 60, 65, which can be moved back and forth between the conveyor 10 and the sections 41 to 44. During their back and forth movement, the feeders may grab balancing weights stored in the trays 31 to 37 on the bottom of the trays and transfer them to the conveyor 10. The conveyor 10 may transfer the balancing weights to a handling device (not shown) which is located at the right or left end of the conveyor. Therefore, the conveyor 10 may be used to deliver a balancing weight to a position from which it can be picked up by the handling device, i.e. an industrial robot.

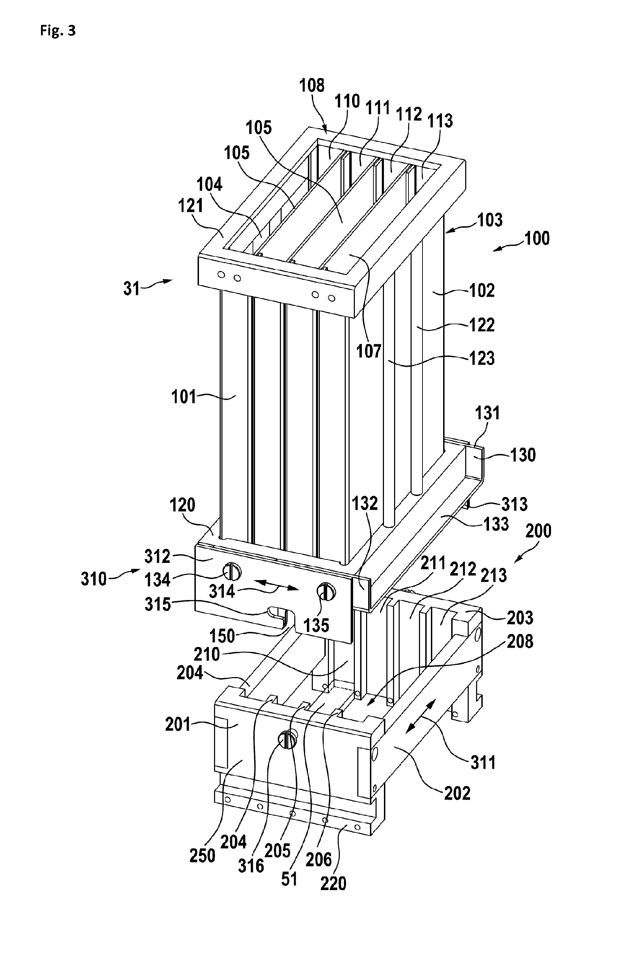

With regard to Figure 3, the at least one tray 31 is described in more detail. The tray 31 comprised of an upper part 100 and a lower part 200 which are shown in Figure 3 in a separated state. The tray is formed like a box having outer walls 101, 102 103, 104 and inner walls 105, 106, 107. The inner walls being partition walls separating the channels 110 to 113 of the sections 41 to 44. The walls 101 to 104 and 105 to 107 defining one or more channels 110 to 113 for containing balancing weights. The upper part 100 may comprise a bottom frame 120 surrounding the outer walls at the lower or bottom end of the upper part 100. The upper end of the upper part 100 comprises a filling opening 108 for each of the channels 110 to 113. The filling opening 108 allows filling or refilling each channel with balancing weights. The upper part 100 may comprise a top frame 121 surrounding the outer walls at the upper or top end of the upper part 100.

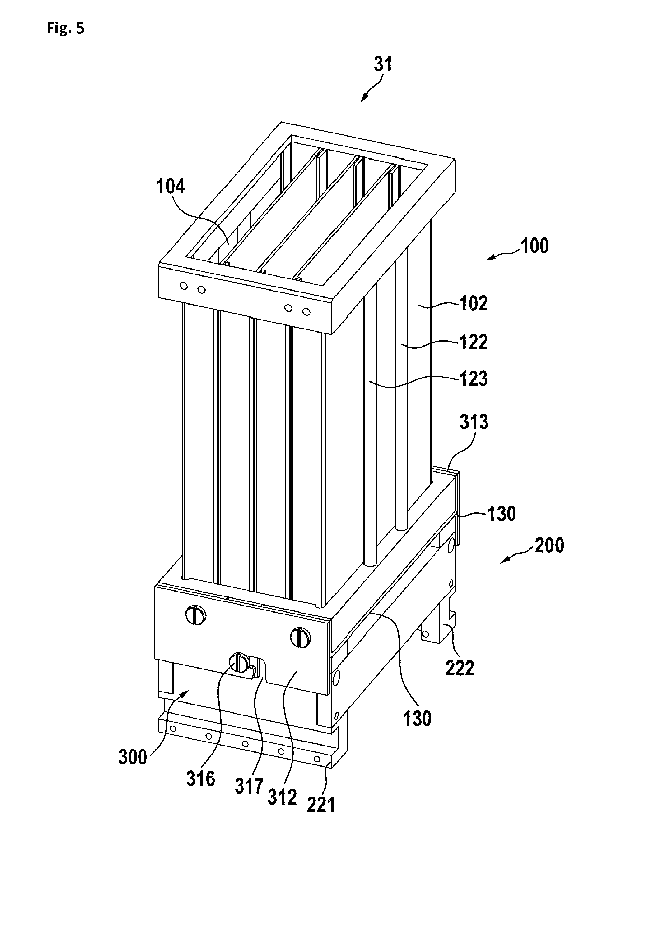

The lower part of 200 of the tray 31 comprises outer walls 201 to 204 and inner walls 205 to 207 like the upper part 100 have. The inner walls being slotted partition walls between the channels 210 to 213. The partition walls 205 to 207 are realized as webs extending from opposite outer walls 201 and 203. Therefore, the partition walls of the lower part 200 are slotted along the height of the lower part of 200. Together with the outer walls 101 to 104 and the partition walls 105 to 107, the outer walls 201 to 204 and the partition walls 205 to 207 forming the channels 110 to 113 and 210 to 213 when the upper part 100 and the lower part 200 are assembled to a coupled state, which will be described below. At the bottom of the lower part 200, a discharge opening 208 is provided for transferring the balancing weights from the sections to the transport unit 22, 23 as described above. Therefore, each channel or section connecting the filling opening 108 with the corresponding discharge opening 208 for slidable conveying the balancing weights in a direction downwardly from the filling opening 108 to the discharge opening 208 when the upper part 100 and the lower part 200 are in the assembled and locked state as shown in Figure 5.

As described, the trays 31 to 37 are separated into at least a first and second part, wherein the first part defining the upper part 100 and the second part defining the lower part 200. The upper part 100 and the lower part 200 each comprise a portion of the channels 110 to 113 and 210 to 213, wherein the portions of the channels in the assembled and locked state defining continuous channels between the filling opening 108 and the discharge opening 208.

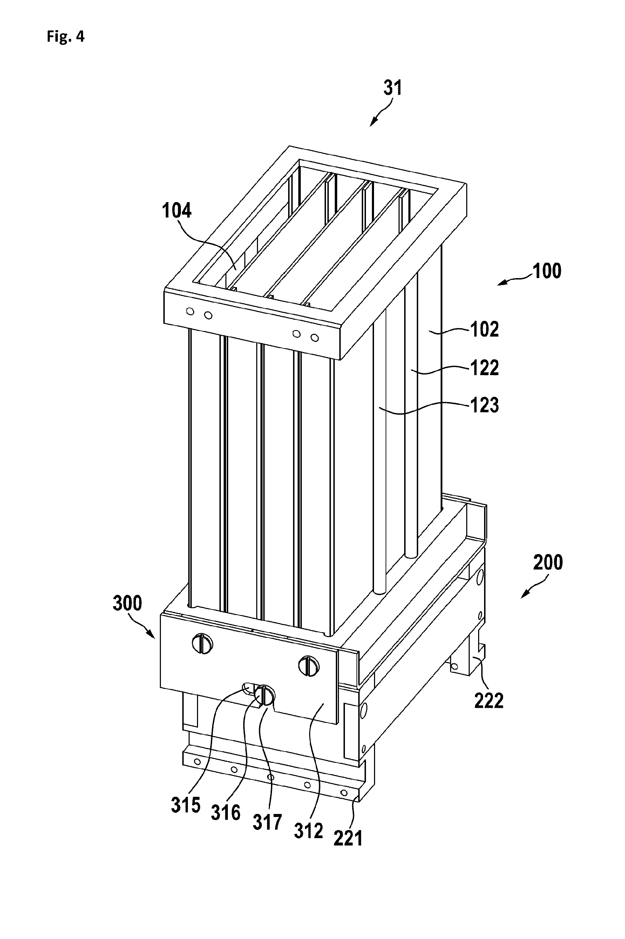

For assembling the upper part 100 with the lower part 200, a coupling device 300 for detachable connecting both parts is provided. The coupling device 300 comprises an aligning device 310 for flush or smooth aligning of inner and outer walls in the direction along the extension of the inner walls as indicated with an arrow 311. Therefore, the aligning device 310 comprised of at least two sidewalls 312 and 313 defining a female member for a fitted reception of the upper end of the lower part 210 therebetween. The sidewalls 312, 313 are attached to the bottom frame 120 or being a part of the bottom frame. For flush aligning of the inner and outer walls in the direction perpendicular to the direction 311, indicated with an arrow 314, the aligning device 310 further comprises an angled and elongated hole 315 located at the sidewall 312 and/or 313 or the bottom frame 120. The elongated hole 315 comprises an opening 317 (Figure 4) at the bottom edge of the sidewall 312 and/or 313 for receiving a pin 316 which slides into the hole 315 in a first upright portion of the hole and in a second angled portion of the whole. When the pin 316 reaches the end of the angled portion the inner and outer walls are aligned flush in the direction as indicated with an arrow 314.

Furthermore, the coupling device 300 comprises an interlocking 150 device which in turn comprises the pin 316 and the hole 315. If the pin 316 reaches the end of the angled portion of the hole 315, the upper and the lower part are assembled and the coupling device 300 is in a locked state as shown in Figure 5.

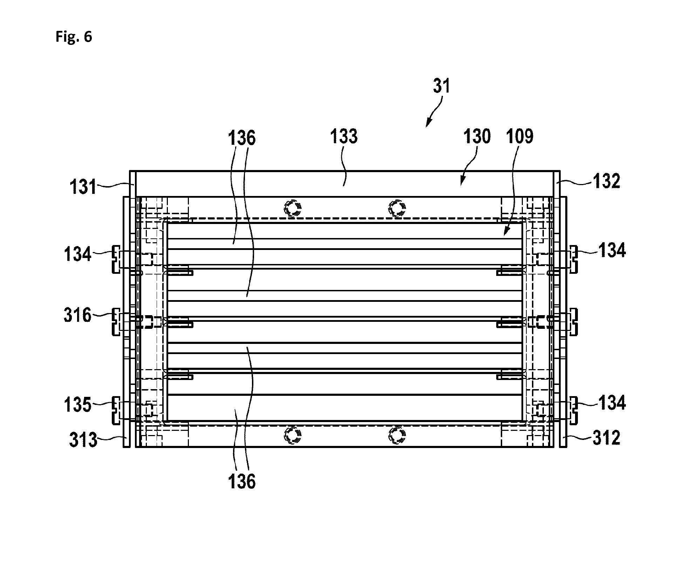

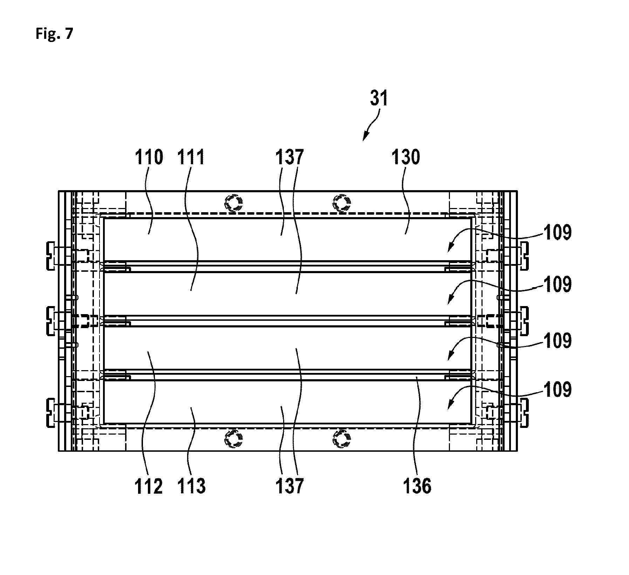

Between the sidewalls 312 and 313 and the bottom frame 120 a cross-sectional u-shaped slider 130 is adjustably guided. The slider 130 comprises two upright wall portions 131 and 132 each extending from the base portion 133 of the slider 130. The upright wall portions may comprise elongated holes penetrated by guiding pins 134 and 135, which are fastened to the bottom frame 120. The length of the elongated holes is adapted to move the slider 130 in a closed position as shown in Figures 3 and 6 and in and open position shown in Figures 5 and 7. In the open position, the slider 130 releases a lower section opening 109 of the upper part 100, so as the balancing weights can move downwardly from the upper part 100 in the lower part 200. The lower section opening 109 is located at the bottom end of the upper part 100 and is therefore located on the opposite end to the filling opening 108. The slider 130 is moved in the closed position before the coupling device 300 is unlocked and the upper part 100 is removed from the lower part 200 of the tray 31 as shown in Figure 3. Assuming that the balancing weight 51 shown in Figure 3 is jammed in the section 42 (channel 211), the balancing weight 51 can be extracted when the upper part is removed from the lower part. After extracting the jammed balancing weight, the upper part 100 is re-assembled to the lower part and the slider 130 is moved in the open position when the coupling device 300 is in the locked state as shown in Figure 5.

The base portion 133 of the slider 130 comprises at least one web 136 extending between the upright wall portions 131, 132 and separating a least two openings 137 in the base portion 133. In the closed position of the slider 130, the webs 136 close the lower section openings 109 of the channels, and in the open position of the slider 130, the openings 137 correspond with the lower section openings 109, so that the balancing weights pass the openings 137 and slide into the channels of the lower part.

According to Figures 4 and 5, the top frame 121 and the bottom frame 122 of the upper part 100 are linked together with at least one connecting rod 122, 123. The connecting rod 122, 123 is located at the outside of the outer walls 101 to 104 and preferably, on opposite sides, that is parallel to walls 102 and 104. Furthermore, the lower part 200 may comprise a mounting section 224 connecting the lower part 200 to the apparatus for dispensing vehicle balancing weights as shown in Figures 1 and 2. The mounting section may comprise two rails 221 and 222, which may be u-shaped in their cross section.

### List of reference numerals

- 10: belt conveyor
- 11: conveyor pulley
- 12: belt support
- 13, 14: conveyor sidewalls
- 20, 21: cartridge
- 22, 23: transport unit
- 31- 37: trays
- 41- 44: sections
- 51- 57: balancing weights
- 60, 65: feeder
- 100: upper part
- 101 - 104: outer wall
- 105 - 107: in the wall
- 108: filling opening
- 109: lower section opening
- 110-113: channel
- 120: bottom frame
- 121: top frame
- 122, 123: connecting rod
- 130: slider
- 131, 132: upright wall portion
- 133: base portion
- 134, 135: guiding pin
- 136: web
- 137: opening
- 150: interlock device
- 200: lower part
- 201- 204: outer wall
- 205 - 207: partition wall
- 208: discharge opening
- 210 - 213: channel
- 220: mounting section
- 221, 222: rail
- 300: coupling device
- 310: aligning device
- 311,314: arrow
- 312,313: sidewall
- 315: hole
- 316: pin
- 317: opening

## Claims

1. Tray for containing at least one vehicle balancing weight for supplying the balancing weight to an apparatus for dispensing the vehicle balancing weight, the tray (31 - 37) comprising:
- at least one section (41 - 44), the section forms at least one channel (110 -113, 210 - 213) for containing the at least one balancing weight (51- 57);
- walls (101 - 107, 201 - 207) defining the at least one channel;
- the channel comprising at least one discharge opening (208) and at least one filling opening (108) for the balancing weight, the channel connects the filling opening and the discharge opening for slidable conveying to balancing weight in a direction from the filling opening to the discharge opening;
**characterized in that**
the tray is separated into at least a first and a second part, where the first part defines an upper part (100) and the second part defines a lower part (200) of the tray, the upper part and the lower part each comprising a portion of the channel (110 -113, 210 - 213), and
the tray further comprising a coupling device (300) for detachable connecting the upper part with the lower part, thereby aligning the walls (101 - 107, 201- 207) defining the at least one channel (110 -113, 210 - 213).

2. Tray according to claim 1,
**characterized in that**
at least two parallel channels for containing balancing weights and at partition wall (105 - 107, 205 - 207) there between are provided.

3. Tray according to any one of the previous claims,
**characterized in that**
the partition wall (205 - 207) of the lower part (200) comprises two webs (136) emanating from sidewalls (201, 203) defining the channels.

4. Tray according to any one of the previous claims,
**characterized in that**
the coupling device (300) comprises an aligning device (310) and an interlock device (150) for fastening the upper part (100) to the lower part (200).

5. Tray according to claim 4,
**characterized in that**
the interlock device (150) comprises an angled and elongated hole (315) and a pin (316) interfering into the elongated hole in a locked state of the coupling device.

6. Tray according to any one of the previous claims,
**characterized in that**
the coupling device (300) further comprising a female member for receiving an end section of the upper or lower part.

7. Tray according to any one of the previous claims,
**characterized in that**
the upper part (100) comprises a lower section opening (109) on the opposite end to the filling opening, and the upper part further comprises a slider (130) for closing optionally the lower section opening if the coupling device (300) is unlocked and the lower and upper part are in a separated state.

8. Tray according to any one of the previous claims,
**characterized in that**
further comprising a mounting section (220) connecting the lower part (200) to the apparatus for dispensing vehicle balancing weights.

9. Tray according to any one of the previous claims,
**characterized in that**
the tray (31 - 33) further comprising a top frame (121) and a bottom frame (120) attached to the upper part (100) and surrounding the outer walls (101-104) defining the at least one channel, the bottom frame defines the female member of the coupling device (300).

10. Tray according to any one of the previous claims,
**characterized in that**
the bottom frame (120) comprises a locking part of the interlock device (150) and/or a guide for the slider (130).

11. Tray according to any one of the previous claims,
**characterized in that**
the bottom frame (120) and the top frame (121) are linked together with at least one connecting rod (122, 123).

12. Tray according to any one of the previous claims,
**characterized in that**
the upper part (100) having a greater height than the lower part (200).

13. Cartridge for containing at least one vehicle balancing weight for supplying the balancing weight to an apparatus for dispensing the vehicle balancing weight, the cartridge comprises at least one tray according to any of the previous claims 1-13.

14. Apparatus for dispensing vehicle balancing weights, comprising
- at least one transport unit (22, 23), and
- further comprising at least one tray according to any of the previous claims 1 - 12.

15. Apparatus according to claim 15,
**characterized in that**,
the apparatus further comprises at least one cartridge according to claim 14.
